# EUROPEAN PATENT SPECIFICATION

(11) **EP 4 311 745 B1**
(45) Date of publication and mention of the grant of the patent: **30.10.2024**
(21) Application number: 23382772.4
(22) Date of filing: 25.07.2023
(51) Int. Cl.: B62D 25/06, B62D 29/04

(54) **A PANORAMIC ROOF ASSEMBLY, A METHOD FOR MOUNTING THE PANORAMIC ROOF ASSEMBLY, AND A VEHICLE EQUIPPED WITH THE PANORAMIC ROOF ASSEMBLY**
PANORAMADACHANORDNUNG, VERFAHREN ZUR MONTAGE DER PANORAMADACHANORDNUNG UND MIT DER PANORAMADACHANORDNUNG AUSGESTATTETES FAHRZEUG
ENSEMBLE TOIT PANORAMIQUE, PROCÉDÉ DE MONTAGE DE L'ENSEMBLE TOIT PANORAMIQUE ET VÉHICULE ÉQUIPÉ DE L'ENSEMBLE TOIT PANORAMIQUE

(30) Priority: 29.07.2022 ES 202230697
(43) Date of publication of application: 31.01.2024
(73) Proprietor: Seat, S.A., 08760 Martorell (ES)
(72) Inventor: CARRERAS GILL, Antonio, 08760 Martorell (ES); ORIOL SALVADOR, Alan, 08760 Martorell (ES); RIO DEIROS, Jose Manuel, 08760 Martorell (ES); ROMERO NIETO, Alberto Jesús, 08760 Martorell (ES)
(74) Representative: Elzaburu S.L.P.

(56) References cited:
- EP-A1- 3 907 124
- DE-A1- 10 158 742
- DE-A1- 102018 214 371
- DE-B- 1 161 155
- US-A1- 2019 084 621

## Description

### Object of the invention

According to a first aspect, the present invention relates to a panoramic roof assembly that is mounted on the body of a vehicle to close by the upper portion of this body of the vehicle.

According to a second aspect, the present invention relates to a method for mounting the panoramic roof assembly. Finally, according to a third aspect, it relates to a vehicle equipped with this panoramic roof assembly.

### State of the art

A panoramic roof assembly for a vehicle is known, comprising:
- a lower front structural cross member that is mounted between the front A-pillars of the body of the vehicle,
- a rear structural cross member that is mounted between the rear C-pillars of the body of the vehicle,
- a front coating cover that is mounted on the lower front structural cross member,
- a rear coating cover that is mounted on the rear structural cross member, and
- a panoramic roof, which is mounted between the front coating cover and the rear coating cover,
said panoramic roof assembly being mounted on a number of specific vehicle models, such that said panoramic roof assembly comprises a number of parts specifically designed for mounting this type of panoramic roof assembly. Each cross member is adapted to be assembled respectively, on the front A-pillars and the rear C-pillars of the body of the vehicle, i.e., at separate locations on the body.

The assembly of the panoramic roof assembly further comprises other elements of the interior passenger compartment of the vehicle such as sun visors, a roof panel, a drain, etc.

European patent application EP3294612 discloses a panoramic roof assembly provided with a panoramic roof supported by a set of metal components to support same and stiffen said area. Said panoramic roof assembly supports the front end and the rear end of the panoramic roof on respective support tabs generated by the front coating cover and the rear coating cover.

The panoramic roof assembly, due to the fact that the panoramic roof rests on respective front and rear coating covers, entails an increase in the thickness of said components, with the increase in material and costs that this represents, in addition to increasing the weight of the vehicle, penalising the autonomy of the vehicle. As a result of said front and rear support, there are inefficiencies in terms of acoustics, rigidity and the assembly process between the components that make up said panoramic roof assembly.

Another example is shown in EP 3 907 124 A1.

It is therefore required to provide a panoramic roof assembly that shares a large number of common elements with other types of roofs of alternative vehicle models in order to simplify the assembly or disassembly of the panoramic roof and, therefore, reduce overall manufacturing costs.

### Summary

The present invention seeks to solve one or more of the aforementioned drawbacks by means of a panoramic roof assembly for a motor vehicle as defined in the claims.

It is an object of the present invention to provide a vehicle panoramic roof assembly comprising a simple structure, which is made up of a reduced number of components, which can be produced at reduced cost, and the assembly of which when mounted on a roof opening provided by the body of the vehicle is simple.

The panoramic roof assembly of the motor vehicle comprises:
a. a lower front structural cross member mounted between the front pillars of the body of the vehicle, which is configured to provide rigidity in the upper area of the front A-pillars,
b. a rear structural cross member mounted between the rear pillars of the body of the vehicle, which is configured to provide rigidity in the upper area of the rear C- or D-pillars,
c. a front coating cover mounted on the lower front structural cross member, which mainly performs an aesthetic or visual function, hiding the interior elements of said upper area of the front A-pillars,
d. a rear coating cover mounted on the rear structural cross member, which mainly performs an aesthetic or visual function, concealing the interior elements of said upper area of the rear C- or D-pillars,
e. a usually transparent panoramic roof that is mounted between the front coating cover and the rear coating cover,
f. an upper front reinforcement cross member is arranged, according to the vertical Y-axis of the vehicle, between the front coating cover and the lower front structural cross member, which mechanically joins a perimeter frame, the front coating cover and the lower front structural cross member and
g. a perimeter frame, which is configured and arranged to generate a perimeter support surface for the panoramic roof and is mounted between the rear edge of the upper front reinforcement cross member, the front edge of the rear structural cross member and the parallel side edges generated by the side assemblies of the vehicle.

Additionally, the vehicle comprises side assemblies of the vehicle, which in turn comprise the front A-pillars, the intermediate B-pillars and the rear C- or D-pillars, in addition to the mechanical coupling components between said front A-pillars, intermediate B-pillars and rear C- or D-pillars of the vehicle, the front A-pillars and the rear C- or D-pillars being arranged at separate locations of a body of the vehicle. Said vehicle side assemblies comprise a plurality of reinforcement or structural elements, configured to provide it with rigidity, and at least one external coating, which mainly performs an aesthetic or visual function, hiding the interior elements of said side areas.

The main characteristic of the present invention is the implementation of the upper front reinforcement cross member, as an individual and separate component of the perimeter frame. In this way, a roof assembly is achieved where the entire perimeter of the panoramic roof rests on the same part, i.e., the perimeter frame, but at the same time it can be industrialised, especially in its front area.

The elements of the panoramic roof assembly are mechanically attached to one another by applying a weld joint, preferably a spot welding.

According to one embodiment, the front edge of the upper front reinforcement cross member is mechanically attached by means of the weld connection to a first central portion of the lower front structural cross member, said first central portion being located between the front edge and the rear edge of the lower front structural cross member. Therefore, said upper front reinforcement cross member does not reach the front edge of the lower front structural cross member, but both parts are welded together in an intermediate area of said front structural cross member. Consequently, a saving of material and weight in the vehicle is allowed, at the same time that it is possible to carry out the welding between said parts with two-thickness welds.

Similarly, the rear edge of the lower front structural cross member is mechanically attached by applying a weld connection to a second central portion of the upper front reinforcement cross member. The second central portion is located between a front support portion and the rear edge of the upper front reinforcement cross member. In this way, the front coating cover and the lower front structural cross member have different lengths, the lower front structural cross member being shorter. By welding said rear edge of the lower front structural cross member in a central or intermediate area of said upper front reinforcement cross member, a threethickness weld is avoided, maintaining optimal rigidity and structural behaviour.

The front edge of the front coating cover is mechanically attached by applying a weld connection to the front edge of the front structural cross member, said welded area being able to be a support lip for the upper end of a windshield of a vehicle.

The rear edge of the front coating cover is mechanically attached by applying a weld connection to the rear edge of the upper front reinforcement cross member and to the front edge of the perimeter frame. As previously mentioned, the rear edge of the lower front structural cross member has been welded to the lower front structural cross member, therefore, a four-thickness weld is avoided, which could not guarantee the behaviour and mechanical stresses in said area of the vehicle.

Similarly, the front edge of the rear coating cover is mechanically attached by applying a weld connection to the rear edge of the perimeter frame, said weld area generating a support lip for the rear edge of the panoramic roof.

The upper front reinforcement cross member comprises a front support portion with a plateau shape, which also acts as support for the corresponding portion of the lower surface of the front coating cover, providing structural rigidity to the panoramic roof assembly. The front support portion is arranged between the front edge of the upper front reinforcement cross member and the second central portion of the upper front reinforcement cross member. Alternatively, the front support portion of the upper front reinforcement cross member has a stepped pyramid shape that provides structural rigidity to the panoramic roof assembly and, in addition, facilitates the protection of the interior passenger compartment of the vehicle upon the upper front reinforcement cross member being deformed in steps in the event of vehicle overturn.

According to said embodiments, the upper front reinforcement cross member makes contact, from its front end to its rear end, with:
- at its front end with a central area of the lower front structural cross member,
- in an intermediate area with the lower surface of the front coating cover, preferably, with the application of an adhesive substance between both components, guaranteeing contact between both parts and avoiding noise and claps during the operation of the vehicle,
- in a second intermediate area with the rear edge of the lower front structural cross member, and
- at its rear end, again with the rear edge of the front coating cover and with the front edge of the perimeter frame.

It can be seen how said upper front reinforcement cross member provides high rigidity in said front area, by mechanically joining twice with the front structural cross member and twice with the front coating cover in a manner interposed with one another.

Therefore, the transparent panoramic roof rests, in its front area, on the edge or flap generated by the assembly formed by the upper front reinforcement cross member and the perimeter frame.

To guarantee the tightness in the supports between the panoramic roof and the perimeter frame, an application of the adhesive substance is carried out, which provides greater stability to the assembly of the panoramic roof of the panoramic roof assembly.

The arrangement of the panoramic roof assembly facilitates the mutual assembly of the different elements of the assembly by means of welding.

The end of each side edge of the perimeter frame rests on respective side surfaces of the side assemblies of the vehicle and together with the rear edge of the lower front structural cross member, wherein said side ends of the perimeter frame comprise at least one plateau shape that is configured to act as support for the panoramic roof.

The configuration of the panoramic roof assembly presented allows, in a front area of said side assemblies, a laser weld to be carried out between the side ends of the front cover and its respective side assembly, and also a laser weld between the side ends of the rear cover and its respective side assembly, providing a high appearance and visual quality. Additionally, in the intermediate area, the panoramic roof is allowed to make contact with said side assembly, for example, by means of a sealing lip, said panoramic roof being supported on the perimeter frame, specifically, in a geometry in the shape of a plateau of said perimeter frame.

Likewise, the perimeter frame receives and serves as support for the transparent panoramic roof that is also attached to the perimeter frame by means of the adhesive substance, allowing a simple and quick assembly.

The rectangular-shaped transparent panoramic roof has a raised surface that occupies almost entirely the upper portion of the body of the vehicle, allowing outside light to penetrate into the interior passenger compartment of the vehicle.

The assembly formed by the upper front reinforcement cross member and the lower front structural cross member of the panoramic roof assembly reinforces the resistance to stresses of the body of the vehicle in the event of an impact, especially in said front area of the panoramic roof.

A method for mounting the panoramic roof assembly comprises the steps of:
a) mechanical attachment of the lower front structural cross member and the upper front reinforcement cross member, forming a front reinforcement assembly, specifically, a mechanical attachment by means of at least one weld connection between the front edge of the upper front reinforcement cross member with a first central portion of the lower front structural cross member, between the front and rear edges of said lower front structural cross member, forming a front reinforcement assembly, and mechanically attaching by means of at least one weld connection the rear edge of the lower front structural cross member with a second central portion of the upper front reinforcement cross member, between a front support portion and the rear edge of said upper front reinforcement cross member,
b) positioning of the front reinforcement assembly and the rear structural cross member with respect to the side assemblies of the vehicle, the front reinforcement assembly being between the front pillars of the body of the vehicle, and the rear structural cross member being positioned between the rear pillars of the vehicle of the body,
c) mechanical attachment, for example, by means of at least one weld joint, of each side end of each front reinforcement assembly with the corresponding side assembly and mechanical attachment of each side end of each rear structural cross member with the corresponding side assembly and mechanically attaching by means of at least one weld connection the front edge of the rear coating cover with the rear edge of the perimeter frame,
d) mechanical attachment, e.g. by means of at least one weld connection between the perimeter frame and the rear coating cover,
e) positioning of the perimeter frame, together with the rear coating, relative to the upper front reinforcement cross member and the side assemblies of the vehicle, and mechanical attachment, for example, by means of at least one weld connection of the perimeter frame to the front coating cover, the upper front reinforcement cross member, the rear structural cross member, and each of the transverse edges generated by the side assemblies of the vehicle, and
f) mechanical positioning and attachment, for example by means of at least one weld joint, of the front coating cover on the front reinforcement assembly, the upper front reinforcement cross member being arranged, along the vertical Y-axis of the vehicle, between the front coating cover and the lower front structural cross member, mechanically attaching, for example by means of at least one weld joint, the front edge of the front coating cover with the front edge of the front structural cross member, and mechanically attaching, for example by means of at least one weld joint, the rear edge of the front coating cover with the rear edge of the upper front reinforcement cross member and the front support surface of the perimeter frame.

The vehicle comprises a body comprising a pair of front A-pillars and a pair of rear C- or D-pillars on which the panoramic roof assembly is mounted according to the mounting method described above, wherein the panoramic roof is made in a single part of a translucent material such as generally transparent glass that provides light to the interior passenger compartment of the vehicle.

### Brief description of the figures

The foregoing and other advantages and features will be more fully understood from the following detailed description of exemplary embodiments with reference to the accompanying drawings, which should be considered by way of illustration and not limitation, wherein:
Figure 1 shows an exploded perspective view of the components that make up a panoramic roof assembly, according to the present invention,
Figure 2 shows a perspective view of the front area of the panoramic roof assembly, according to the present invention,
Figure 3 shows a cross section along the longitudinal X-axis of the vehicle and along the vertical Y-axis of the vehicle of the panoramic roof assembly of Figure 2,
Figure 4 shows a plan view of the panoramic roof assembly, according to the present invention, and a cross section along the longitudinal X-axis of the vehicle and along the vertical Y-axis of the vehicle of the panoramic roof assembly represented, and
Figure 5 shows a plan view of a side detail of the panoramic roof assembly, according to the present invention, and three cross sections according to the transversal Z-axis of the vehicle and according to the vertical Y-axis of the vehicle of the panoramic roof assembly represented.

### Detailed description

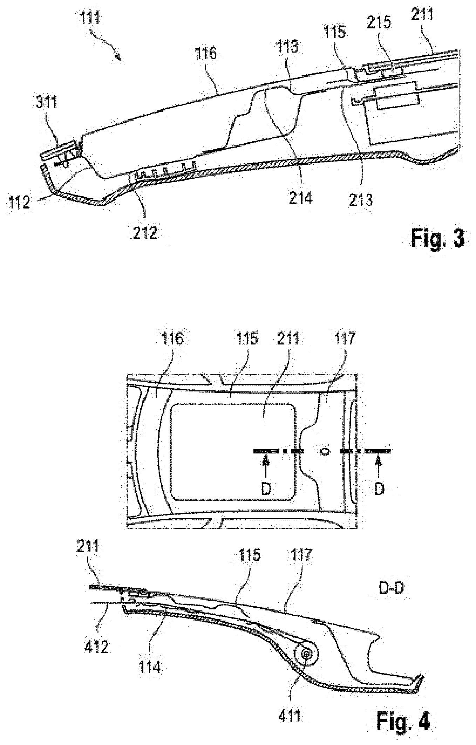

Referring to Figure 4 where a plan view of a panoramic roof assembly 111 of a motor vehicle is shown. Specifically, a design is sought in which a panoramic roof 211 is delimited by sheet metal components, for example, a first front metal surface, a second rear metal surface, and side metal surfaces. As can be seen, the glazed surface of the panoramic roof 211 is predominant.

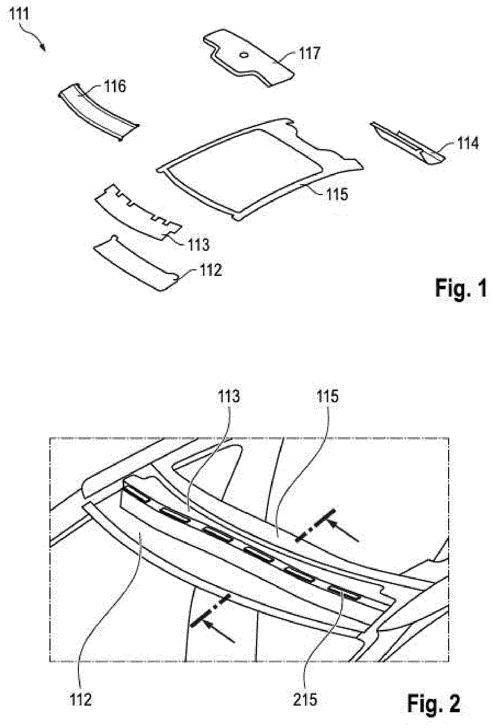

Referring now to Figure 1 where an exploded view of the panoramic roof assembly 111 of the motor vehicle is shown, showing the different sheet metal or metal parts that make it up.

The panoramic roof assembly 111 comprises:
- a lower front structural cross member 112, which is mounted between the parallel front A-pillars of the body of the vehicle,
- a rear structural cross member 114, which is mounted between the parallel rear C- or D-pillars of the body of the vehicle,
- a rear coating cover 117, which is mounted on the rear structural cross member 114,
- an upper front reinforcement cross member 113 that is arranged, according to the vertical Y-axis of the vehicle, between a front coating cover 116 and the lower front structural cross member 112, which mechanically joins a perimeter frame 115, the front coating cover 116 and the lower front structural cross member 112, and
- the perimeter frame 115 is mounted on the rear edge of the upper front reinforcement cross member 113, the front edge of the rear structural cross member 114 and the parallel side edges generated by the side assemblies of the vehicle, which mechanically couple the front A-pillars to the rear C- or D-pillars of the vehicle. The perimeter frame 115 generates a perimeter support surface for a panoramic roof 211.

The generally transparent, rectangular-shaped panoramic roof 211 has a large-dimensioned surface that occupies almost entirely the upper portion of the body of the vehicle and allows outside light to penetrate into the interior passenger compartment of the vehicle.

The front A-pillars and the rear C- or D-pillars are located in separate locations of the body of the vehicle.

Referring now to Figure 2, it shows a detailed view of the construction of the front area of the panoramic roof assembly 111 of the vehicle of the present invention. Specifically, the two side assemblies are represented, formed by their respective metal sheets, which make up the side structure of the vehicle. In said front area of the panoramic roof assembly 111, the lower front structural cross member 112, the upper front reinforcement cross member 113 and the front area of the perimeter frame 115 are represented. Said three components are mechanically joined by means of welding at their side ends with the respective side assemblies.

According to said preferred embodiment of the invention, the perimeter frame 115 and the upper front reinforcement cross member 113 are independent components, making it possible to achieve optimal rigidity and mechanical behaviour rates in said area. As explained a posteriori, said separation of components is also essential to be able to assemble said panoramic roof assembly 111, without having excess material and weight in the vehicle.

In order to optimise the support between the front coating cover 116 and the upper front reinforcement cross member 113, said upper front reinforcement cross member 113 comprises a step geometry from the lowest area along the vertical Y-axis, which is in contact and mechanically joined by means of welding with the lower front structural cross member 112, and the uppermost area according to said vertical Y-axis, which is in contact and mechanically joined by the application of an adhesive substance in the form of an adhesive bead with the front coating cover 116. Said adhesive bead is represented by a dashed line with large dashes.

In greater detail, in the cross-sectional view of Figure 3, which represents a transversal section, according to the longitudinal X-axis of the vehicle and according to the vertical Y-axis of the vehicle, the components of said front area of the panoramic roof assembly 111 are represented. The lower front structural cross section 112 has a transversal section in the shape of a bathtub and the upper front reinforcement cross member 113 has a transversal section in the shape of a plateau or truncated pyramid, which form an assembly of front reinforcement that provides continuity between the rear portion of the front windshield 311 and the front portion of the panoramic roof 211 of the vehicle. Additionally, said transversal section shows the inner coating, generally made of textile material, which covers all the aforementioned sheet metal components by the lower area.

The reinforcement assembly is a complex part in terms of geometry due to the integration of the lower front structural cross member 112 and the upper front reinforcement cross member 113, which stiffens this assembly to form a structural part that meets the structural requirements of the panoramic roof assembly 111.
a) Alternatively, the upper front reinforcement cross member 113 has a transversal section in the shape of a stepped pyramid. Thus, the upper front reinforcement cross member 113 is mechanically joined along the longitudinal X-axis of the vehicle in two areas with both the front coating cover 116 and the lower front structural cross member 112. Said connection is made in an interposed manner, along the longitudinal X-axis, with each of the aforementioned components, as explained below: The front edge of the upper front reinforcement cross member 113 is attached by means of a weld connection to a first central portion 212 of the lower front structural cross member 112. Said front connection of the upper front reinforcement cross member 113 occurs in the central area of the sink generated by the lower front structural cross member 112.
b) In a central area of the upper front reinforcement cross member 113, a mechanical connection is produced between said upper front reinforcement cross member 113 and the front coating cover 116, in the highest area, along the vertical Y-axis of the vehicle. Said connection is produced through the application of a bead of adhesive substance 215, which guarantees the mechanical behaviour and, at the same time, the aesthetic appearance, since the front coating cover 116 is a component seen from the outside of the vehicle.
c) In a second central portion 213 of the upper front reinforcement cross member 113, displaced towards the rear area of said component with respect to the previously disclosed point b), a mechanical connection is produced by means of at least one welding point, between said upper front reinforcement cross member 113 and, again, with the lower front structural cross member 112, specifically, with the rear edge of said lower front structural cross member 112.
d) Finally, at the rear edge of the upper front reinforcement cross member 113, a mechanical connection is produced by means of at least one welding point, between said upper front reinforcement cross member 113 and, again, the front coating cover 116, specifically, with the rear edge of said front coating cover 116.

The upper front reinforcement cross member 113 comprises a front support portion 214 corresponding to the plateau of the truncated pyramid shape. The plateau-shaped front support portion 214 acts, as mentioned in point b), as support for the corresponding portion of the lower surface of the front coating cover 116, which is arranged between the front edge of the upper front reinforcement cross member 113 and the second central portion 213 of the upper front reinforcement cross member 113.

The front support portion 214 of the upper front reinforcement cross member 113 acts as longitudinal and transversal support, according to the X and Z axes of the vehicle, for the front coating cover 116.

The second central portion 213 is located after the front support portion 214 and before the rear edge of the upper front reinforcement cross member 113.

The front edge of the front coating cover 116 is mechanically attached by means of a weld connection to the front edge of the front structural cross member 112. The rear edge of the front coating cover 116 is mechanically attached by means of a weld connection to the rear edge of the upper front reinforcement cross member 113 and to the front edge of the perimeter frame 115.

Referring now to Figure 4, where a plan view of the panoramic roof assembly 111 and a transversal section according to the longitudinal X-axis of the vehicle and the vertical Y-axis of the vehicle are shown, represented with a dashed line in said plan view.

Thus, in said Figure 4 the rear area of the panoramic roof 211, the rear coating cover 117, the rear structural cross member 114 and the perimeter frame 115 are represented. Specifically, the front edge of the rear coating cover 117 is mechanically attached by means of a weld connection to the rear edge of the perimeter frame 115, generating a support lip or surface for the panoramic roof 211.

The perimeter frame 115 has a rear edge with a plateau-shaped geometry that acts as support, at different points, for the rear coating cover 117. At said points of contact between both components, beads of adhesive substance 215 are applied.

Additionally, as can be seen in said Figure 4, the rear area of the perimeter frame 115 comprises at least one means for receiving a sun visor assembly, said receiving means being configured to hold a winding shaft for a sheet 412 of textile material, which is wound and unwound around said winding shaft. Said sun visor assembly makes it possible to prevent the passage of at least part of the sunlight beams through the panoramic roof 211. The sheet 412 of textile material runs under the panoramic roof 211, guided at each side end by guide means.

Thus, the sun visor assembly is attached to the perimeter frame 115 by means of fasteners distributed regularly along the parallel side edges of the perimeter frame 115. The fasteners allow the sun visor to rotate around a horizontal winding shaft, according to the transversal Z-axis of the vehicle, in order to cover or uncover the lower surface of the panoramic roof 211.

The horizontal winding shaft 411 is attached to a pair of fasteners that project towards a corresponding housing arranged near the rear edge of the perimeter frame 115.

Said sun visor assembly, in particular, the winding shaft is covered by the rear coating cover 117 and by an inner coating, in order to provide the assembly with a correct visual appearance.

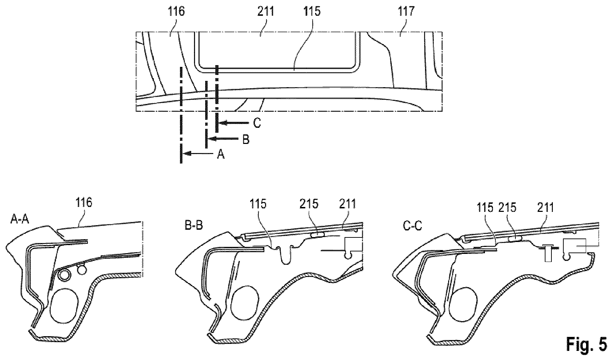

Referring now to Figure 5, where a plan view of a front side area of the panoramic roof 111 and three transversal sections according to the transversal Z-axis of the vehicle and the vertical Y-axis of the vehicle are shown, represented with respective dashed lines in said plan view.

Thus, in said Figure 5 the front side area of the driver's side of the panoramic roof 211, the front coating cover 116 and the side assembly are represented. Said side assembly is made up of different metal sheets, such as an outer cover, an inner structural reinforcement, and others.

Specifically, cross section A-A represents a cross section in the mechanical connection area between the side assembly and the front coating cover 116. It is observed that the mechanical connection between both sheet metal components is carried out by means of laser welding, providing a high surface and visual finish to said joint.

For its part, cross section B-B represents a cross section in the mechanical connection area between the panoramic roof 211 and the side assembly. Specifically, it can be seen how the panoramic roof 211 rests on the perimeter frame 115 by means of a sealing and adhesive element. Additionally, the panoramic roof 211 rests on the side assembly by means of a sealing lip. Finally, it can be seen that a side end of the perimeter frame 115 has a geometry in the shape of a bowl, comprising in its lower area a through hole configured to house a liquid conduit, such that the extraction of fluids and dirt existing in the lower area of the panoramic roof 211 is allowed.

Finally, in cross section C-C a transversal section is represented in the area of mechanical connection between the panoramic roof 211 and the side assembly. Specifically, it can be seen how the panoramic roof 211 rests on the perimeter frame 115 by means of a sealing and adhesive element. Additionally, the panoramic roof 211 rests on the side assembly by means of a sealing lip. Finally, it can be seen that the perimeter frame 115 comprises at least one means for receiving at least one means for guiding the sheet 412 of textile material of the sun visor assembly, which runs through said guide means in its extraction and retraction movement from the winding shaft, to cover or uncover, respectively, the panoramic roof 211.

As shown in the various figures, the perimeter frame 115 receives and serves as support for the transparent panoramic roof 211 which is attached to this perimeter frame 115 by means of a continuous or discontinuous bead of adhesive substance 215.

The perimeter frame 115 is manufactured in a single part of sheet metal through a single hot forming process, which comprises at least one step of stamping, bending, cutting, etc., which allows the integration of complex geometries forming an integral part of a complex part in terms of geometry of the perimeter frame 115.

The perimeter frame 115 provides the perimeter side edge of support for the transparent panoramic roof 211 and for both front 116 and rear 117 coating covers, allowing a simple and quick assembly of the panoramic roof assembly 111.

As mentioned, the sun visor assembly and the guide rails are mechanically joined to the perimeter frame 115 by means of fasteners, such as bolt or clip, said perimeter frame 115 being capable of additionally supporting the stresses applied for sliding, winding or unwinding the sun visor from the horizontal winding shaft.

According to a second aspect of the present invention, it relates to a method for mounting the panoramic roof assembly 111, comprising the steps of:
a) mechanical attachment by applying a weld connection between the lower front structural cross member 112 and the upper front reinforcement cross member 113, to form a front reinforcement assembly,
b) positioning of the front reinforcement assembly and the rear structural cross member 114 with respect to the side assemblies of the vehicle, wherein the front reinforcement assembly is mounted between the front A-pillars of the body of the vehicle, and the positioned rear structural cross member 114 is mounted between the rear C- or D-pillars of the body of the vehicle,
c) mechanical attachment by applying a weld connection of each side end of each front reinforcement assembly with its corresponding side assembly and mechanical attachment of each side end of each rear structural cross member 114 with its corresponding side assembly,
d) mechanical attachment by applying a weld connection between the perimeter frame 115 and the rear coating cover 117,
e) positioning of the perimeter frame 115, together with the rear coating 117, with respect to the upper front reinforcement cross member 113 and to the side assemblies of the vehicle, and mechanical attachment by applying a weld connection of the perimeter frame 115 with the front coating cover 116, the upper front reinforcement cross member 113, the rear structural cross member 114, and each of the transverse edges generated by the side assemblies of the vehicle, and
f) positioning and mechanical attachment by applying a weld connection of the front coating cover 116 on the front reinforcement assembly, the upper front reinforcement cross member 113 being arranged, according to the vertical Y-axis of the vehicle, between the front coating cover 116 and the lower front structural member 112 in a layered or sandwich configuration.

### LIST OF NUMBER REFERENCES

111 panoramic roof assembly
112 lower front structural cross member
113 upper front reinforcement cross member
114 rear structural cross member
115 perimeter frame
116 front coating cover
117 rear coating cover
211 panoramic roof
212 first central portion
213 second central portion
214 front support portion
215 adhesive substance
311 windshield
411 winding shaft
412 sheet

## Claims

1. A vehicle panoramic roof assembly (111) comprising:
a. a lower front structural cross member (112), which is mounted between the front pillars of the body of the vehicle,
b. a rear structural cross member (114), which is mounted between the rear pillars of the body of the vehicle,
c. a front coating cover (116), which is mounted on the lower front structural cross member (112),
d. a rear coating cover (117), which is mounted on the rear structural cross member (114), and
e. a panoramic roof (211), which is mounted between the front coating cover (116) and the rear coating cover (117),
**characterised in that** the panoramic roof assembly (111) further comprises
f. an upper front reinforcement cross member (113), which is arranged, along the vertical Y-axis of the vehicle, between the front coating cover (116) and the lower front structural cross member (112), and is configured to mechanically join a perimeter frame (115), the front coating cover (116) and the lower front structural cross member (112), and
g. the perimeter frame (115), which is configured and arranged to generate a perimeter support surface of the panoramic roof (211) and is mounted between the rear edge of the upper front reinforcement cross member (113), the front edge of the rear structural cross member (114) and the parallel side edges generated by the side assemblies of the vehicle, which mechanically couple the front pillars to the rear pillars of the vehicle, the front and rear pillars being arranged at separate locations of a body of the vehicle.

2. The panoramic roof assembly (111) according to claim 1; wherein the front edge of the upper front reinforcement cross member (113) is mechanically attached by means of at least one weld connection to a first central portion (212) of the lower front structural cross member (112), said first central portion (212) being located between the front edge and the rear edge of said lower front structural cross member (112).

3. The panoramic roof assembly (111) according to any of the preceding claims; wherein the rear edge of the lower front structural cross member (112) is mechanically attached by means of at least one weld connection to a second central portion (213) of the upper front reinforcement cross member (113), said second central portion (213) being located between a front support portion (214) and the rear edge of said upper front reinforcement cross member (113).

4. The panoramic roof assembly (111) according to any of the preceding claims; wherein the front edge of the front coating cover (116) is mechanically attached by means of at least one weld connection to the front edge of the front structural cross member (112).

5. The panoramic roof assembly (111) according to any of the preceding claims; wherein the rear edge of the front coating cover (116) is mechanically attached by means of at least one weld connection to the rear edge of the upper front reinforcement cross member (113) and to the front edge of the perimeter frame (115).

6. The panoramic roof assembly (111) according to claim 3; wherein the front support portion (214) of the upper front reinforcement cross member (113) has a plateau shape, which is configured to act as support for a section of the lower surface of the front coating cover (116) and is arranged between the front edge of the upper front reinforcement cross member (113) and the second central portion (213) of the upper front reinforcement cross member (113).

7. The panoramic roof assembly (111) according to any of the preceding claims, wherein the front edge of the rear coating cover (117) is mechanically attached by means of at least one weld connection to the rear edge of the perimeter frame (115), wherein said front edge of the perimeter frame (115) comprises a plateau shape, being configured to act as support for the lower surface of the front edge of the rear coating cover (117).

8. A method for mounting a panoramic roof assembly (111) according to any one of claims 1 to 7, wherein the method comprises the steps of:
a) mechanically attaching the lower front structural cross member (112) and the upper front reinforcement cross member (113), forming a front reinforcement assembly,
b) positioning the front reinforcement assembly and the rear structural cross member (114) with respect to the side assemblies of the vehicle, the front reinforcement assembly being between the front pillars of the body of the vehicle, and the rear structural cross member (114) being positioned between the rear pillars of the body of the vehicle,
c) mechanically attaching each side end of each front reinforcement assembly with its respective side assembly and mechanically attaching each side end of each rear structural cross member (114) with its respective side assembly,
d) mechanically attaching the perimeter frame (115) and the rear coating cover (117),
e) positioning the perimeter frame (115), together with the rear coating (117), with respect to the upper front reinforcement cross member (113) and the side assemblies of the vehicle, and mechanically attaching the perimeter frame (115) with the front coating cover (116), the upper front reinforcement cross member (113), the rear structural cross member (114), and each of the transverse edges generated by the side assemblies of the vehicle, and
f) positioning and mechanically attaching the front coating cover (116) on the front reinforcement assembly, the upper front reinforcement cross member (113) being arranged, according to the vertical Y-axis of the vehicle, between the front coating cover (116) and the lower front structural cross member (112).

9. The mounting method according to claim 8, when same depends on claim 2, wherein step a) comprises mechanically attaching by means of at least one weld connection the front edge of the upper front reinforcement cross member (113) with a first central portion (212) of the lower front structural cross member (112), said first central portion (212) being located between the front and rear edge of said lower front structural cross member (112).

10. The mounting method according to any of claims 8 to 9, when same depends on claim 3, wherein step a) comprises mechanically attaching by means of at least one weld connection the rear edge of the lower front structural cross member (112) with a second central portion (213) of the upper front reinforcement cross member (113), said second central portion (213) being located between a front support portion (214) and the rear edge of said upper front reinforcement cross member (113).

11. The mounting method according to any of claims 8 to 10, when same depends on claim 8, wherein step c) comprises mechanically attaching by means of at least one weld connection the front edge of the rear coating cover (117) with the rear edge of the perimeter frame (115), said rear edge of the perimeter frame (115) comprising a plateau shape.

12. The mounting method according to any of claims 8 to 11, when same depends on claim 4, wherein step f) comprises mechanically attaching by means of at least one weld connection the front edge of the front coating cover (116) with the front edge of the front structural cross member (112).

13. The mounting method according to any of claims 8 to 12, when same depends on claim 5, wherein step f) comprises mechanically attaching by means of at least one weld connection the rear edge of the front coating cover (116) with the rear edge of the upper front reinforcement cross member (113) and the front support surface of the perimeter frame (115).

14. The mounting method according to any of the preceding claims, wherein the method further comprises the step of applying a bead of an adhesive substance (215) on the second central plateau-shaped portion of the upper front reinforcement cross member (113), and supporting a corresponding section of the lower surface of the front coating cover (116) on the bead of adhesive substance (215), acting as support for the front coating cover (116).

15. A vehicle comprising a body comprising a pair of front A-pillars and a pair of rear Cor D-pillars on which a panoramic roof assembly (111) according to any of claims 1 to 8 is mounted, by means of the mounting method according to any of claims 8 to 14

## Patentansprüche

1. Fahrzeug-Panoramadachanordnung (111), umfassend:
a. ein unteres vorderes Strukturquerelement (112), das zwischen den vorderen Säulen der Karosserie des Fahrzeugs montiert ist,
b. ein hinteres Strukturquerelement (114), das zwischen den hinteren Säulen der Karosserie des Fahrzeugs montiert ist,
c. eine vordere Beschichtungsabdeckung (116), die an dem unteren vorderen Strukturquerelement (112) montiert ist,
d. eine hintere Beschichtungsabdeckung (117), die auf dem hinteren Strukturquerelement (114) montiert ist, und
e. ein Panoramadach (211), das zwischen der vorderen Beschichtungsabdeckung (116) und der hinteren Beschichtungsabdeckung (117) montiert ist,
**dadurch gekennzeichnet, dass** das Panoramadachanordnung (111) weiter umfasst
f. ein oberes vorderes Verstärkungsquerelement (113), das entlang der vertikalen Y-Achse des Fahrzeugs zwischen der vorderen Beschichtungsabdeckung (116) und dem unteren vorderen Strukturquerelement (112) angeordnet ist und konfiguriert ist, um einen Umfangsrahmen (115), die vordere Beschichtungsabdeckung (116) und das untere vordere Strukturquerelement (112) mechanisch zu verbinden, und
g. den Umfangsrahmen (115), der konfiguriert und angeordnet ist, um eine Umfangsstützoberfläche des Panoramadachs (211) zu erzeugen, und der zwischen der Hinterkante des oberen vorderen Verstärkungsquerelements (113), der Vorderkante des hinteren Strukturquerelements (114) und den parallelen Seitenkanten, die durch die Seitenanordnungen des Fahrzeugs erzeugt werden, montiert ist, welche die vorderen Säulen mechanisch mit den hinteren Säulen des Fahrzeugs koppeln, wobei die vorderen und hinteren Säulen an separaten Stellen einer Karosserie des Fahrzeugs angeordnet sind.

2. Panoramadachanordnung (111) nach Anspruch 1; wobei die Vorderkante des oberen vorderen Verstärkungsquerelements (113) anhand mindestens einer Schweißverbindung mechanisch an einem ersten mittleren Abschnitt (212) des unteren vorderen Strukturquerelements (112) befestigt ist, wobei sich der erste mittlere Abschnitt (212) zwischen der Vorderkante und der Hinterkante des unteren vorderen Strukturquerelements (112) befindet.

3. Panoramadachanordnung (111) nach einem der vorstehenden Ansprüche; wobei die Hinterkante des unteren vorderen Strukturquerelements (112) anhand mindestens einer Schweißverbindung mechanisch an einem zweiten mittleren Abschnitt (213) des oberen vorderen Verstärkungsquerelements (113) befestigt ist, wobei sich der zweite mittlere Abschnitt (213) zwischen einem vorderen Stützabschnitt (214) und der Hinterkante des oberen vorderen Verstärkungsquerelements (113) befindet.

4. Panoramadachanordnung (111) nach einem der vorstehenden Ansprüche; wobei die Vorderkante der vorderen Beschichtungsabdeckung (116) anhand mindestens einer Schweißverbindung mechanisch an der Vorderkante des vorderen Strukturquerelements (112) befestigt ist.

5. Panoramadachanordnung (111) nach einem der vorstehenden Ansprüche, wobei die Hinterkante der vorderen Beschichtungsabdeckung (116) anhand mindestens einer Schweißverbindung mechanisch an der Hinterkante des oberen vorderen Verstärkungsquerelements (113) und an der Vorderkante des Umfangsrahmens (115) befestigt ist.

6. Panoramadachanordnung (111) nach Anspruch 3; wobei der vordere Stützabschnitt (214) des oberen vorderen Verstärkungsquerelements (113) eine Plateauform aufweist, die konfiguriert ist, um als Stütze für einen Abschnitt der unteren Oberfläche der vorderen Beschichtungsabdeckung (116) zu wirken, und zwischen der Vorderkante des oberen vorderen Verstärkungsquerelements (113) und dem zweiten mittleren Abschnitt (213) des oberen vorderen Verstärkungsquerelements (113) angeordnet ist.

7. Panoramadachanordnung (111) nach einem der vorstehenden Ansprüche, wobei die Vorderkante der hinteren Beschichtungsabdeckung (117) anhand mindestens einer Schweißverbindung mechanisch an der Hinterkante des Umfangsrahmens (115) befestigt ist, wobei die Vorderkante des Umfangsrahmens (115) eine Plateauform umfasst und konfiguriert ist, um als Stütze für die untere Oberfläche der Vorderkante der hinteren Beschichtungsabdeckung (117) zu wirken.

8. Verfahren zur Montage einer Panoramadachanordnung (111) nach einem der Ansprüche 1 bis 7, wobei das Verfahren die Schritte umfasst zum:
a) mechanischen Befestigen des unteren vorderen Strukturquerelements (112) und des oberen vorderen Verstärkungsquerelements (113), die eine vordere Verstärkungsanordnung bilden,
b) Positionieren der vorderen Verstärkungsanordnung und des hinteren Strukturquerelements (114) in Bezug auf die Seitenanordnungen des Fahrzeugs, wobei sich die vordere Verstärkungsanordnung zwischen den vorderen Säulen der Karosserie des Fahrzeugs befindet, und das hintere Strukturquerelement (114) zwischen den hinteren Säulen der Karosserie des Fahrzeugs positioniert ist,
c) mechanischen Befestigen jedes Seitenendes jeder vorderen Verstärkungsanordnung mit ihrer jeweiligen Seitenanordnung, und mechanischen Befestigen jedes Seitenendes jedes hinteren Strukturquerelements (114) mit seiner jeweiligen Seitenanordnung,
d) mechanischen Befestigen des Umfangsrahmens (115) und der hinteren Beschichtungsabdeckung (117),
e) Positionieren des Umfangsrahmens (115) zusammen mit der hinteren Beschichtung (117) in Bezug auf das obere vordere Verstärkungsquerelement (113) und die Seitenanordnungen des Fahrzeugs, und mechanischen Befestigen des Umfangsrahmens (115) mit der vorderen Beschichtungsabdeckung (116), dem oberen vorderen Verstärkungsquerelement (113), dem hinteren Strukturquerelement (114) und jeder der durch die Seitenanordnungen des Fahrzeugs erzeugten Querkanten, und
f) Positionieren und mechanischen Befestigen der vorderen Beschichtungsabdeckung (116) auf der vorderen Verstärkungsanordnung, wobei das obere vordere Verstärkungsquerelement (113) in Bezug auf die vertikale Y-Achse des Fahrzeugs zwischen der vorderen Beschichtungsabdeckung (116) und dem unteren vorderen Strukturquerelement (112) angeordnet ist.

9. Montageverfahren nach Anspruch 8, sofern dieser von Anspruch 2 abhängt, wobei Schritt a) das mechanische Befestigen der Vorderkante des oberen vorderen Verstärkungsquerelements (113) anhand mindestens einer Schweißverbindung mit einem ersten mittleren Abschnitt (212) des unteren vorderen Strukturquerelements (112) umfasst, wobei sich der erste mittlere Abschnitt (212) zwischen der Vorder- und der Hinterkante des unteren vorderen Strukturquerelements (112) befindet.

10. Montageverfahren nach einem der Ansprüche 8 bis 9, sofern diese von Anspruch 3 abhängen, wobei Schritt a) das mechanische Befestigen der Hinterkante des unteren vorderen Strukturquerelements (112) anhand mindestens einer Schweißverbindung mit einem zweiten mittleren Abschnitt (213) des oberen vorderen Verstärkungsquerelements (113) umfasst, wobei sich der zweite mittlere Abschnitt (213) zwischen einem vorderen Stützabschnitt (214) und der Hinterkante des oberen vorderen Verstärkungsquerelements (113) befindet.

11. Montageverfahren nach einem der Ansprüche 8 bis 10, sofern dieses von Anspruch 8 abhängt, wobei Schritt c) das mechanische Befestigen der Vorderkante der hinteren Beschichtungsabdeckung (117) anhand mindestens einer Schweißverbindung mit der Hinterkante des Umfangsrahmens (115) umfasst, wobei die Hinterkante des Umfangsrahmens (115) eine Plateauform umfasst.

12. Montageverfahren nach einem der Ansprüche 8 bis 11, sofern diese von Anspruch 4 abhängen, wobei Schritt f) das mechanische Befestigen der Vorderkante der vorderen Beschichtungsabdeckung (116) anhand mindestens einer Schweißverbindung mit der Vorderkante des vorderen Strukturquerelements (112) umfasst.

13. Montageverfahren nach einem der Ansprüche 8 bis 12, sofern diese von Anspruch 5 abhängen, wobei Schritt f) das mechanische Befestigen der Hinterkante der vorderen Beschichtungsabdeckung (116) anhand mindestens einer Schweißverbindung mit der Hinterkante des oberen vorderen Verstärkungsquerelements (113) und der vorderen Stützoberfläche des Umfangsrahmens (115) umfasst.

14. Montageverfahren nach einem der vorstehenden Ansprüche, wobei das Verfahren weiter den Schritt des Aufbringens eines Wulstes einer Haftsubstanz (215) auf dem zweiten mittleren plateauförmigen Abschnitt des oberen vorderen Verstärkungsquerelements (113) und des Stützens eines entsprechenden Abschnitts der unteren Oberfläche der vorderen Beschichtungsabdeckung (116) auf dem Wulst der Haftsubstanz (215), der als Stütze für die vordere Beschichtungsabdeckung (116) wirkt, umfasst.

15. Fahrzeug, das eine Karosserie umfasst, die ein Paar vorderer A-Säulen und ein Paar hinterer C- oder D-Säulen umfasst, auf denen eine Panoramadachanordnung (111) nach einem der Ansprüche 1 bis 8 anhand des Montageverfahrens nach einem der Ansprüche 8 bis 14 montiert ist.

## Revendications

1. Ensemble toit panoramique de véhicule (111) comprenant :
a. un élément transversal structurel avant inférieur (112) qui est monté entre les montants avant de la carrosserie du véhicule,
b. un élément transversal structurel arrière (114) qui est monté entre les montants arrière de la carrosserie du véhicule,
c. un couvercle de revêtement avant (116) qui est monté sur l'élément transversal structurel avant inférieur (112),
d. un couvercle de revêtement arrière (117) qui est monté sur l'élément transversal structurel arrière (114), et
e. un toit panoramique (211) qui est monté entre le couvercle de revêtement avant (116) et le couvercle de revêtement arrière (117),
**caractérisé en ce que** l'ensemble toit panoramique (111) comprend en outre
f. un élément transversal de renfort avant supérieur (113) qui est agencé le long de l'axe Y vertical du véhicule, entre le couvercle de revêtement avant (116) et l'élément transversal structurel avant inférieur (112), et est configuré pour joindre mécaniquement un châssis périphérique (115), le couvercle de revêtement avant (116) et l'élément transversal structurel avant inférieur (112), et
g. le châssis périphérique (115) qui est configuré et agencé pour générer une surface de support périphérique du toit panoramique (211) et est monté entre le bord arrière de l'élément transversal de renfort avant supérieur (113), le bord avant de l'élément transversal structurel arrière (114) et les bords latéraux parallèles générés par les ensembles latéraux du véhicule qui couplent mécaniquement les montants avant aux montants arrière du véhicule, les montants avant et arrière étant agencés à des emplacements séparés d'une carrosserie du véhicule.

2. Ensemble toit panoramique (111) selon la revendication 1; dans lequel le bord avant de l'élément transversal de renfort avant supérieur (113) est attaché mécaniquement au moyen d'au moins une connexion soudée à une première partie centrale (212) de l'élément transversal structurel avant inférieur (112), ladite première partie centrale (212) étant située entre le bord avant et le bord arrière dudit élément transversal structurel avant inférieur (112).

3. Ensemble toit panoramique (111) selon l'une quelconque des revendications précédentes ; dans lequel le bord arrière de l'élément transversal structurel avant inférieur (112) est attaché mécaniquement au moyen d'au moins une connexion soudée à une seconde partie centrale (213) de l'élément transversal de renfort avant supérieur (113), ladite seconde partie centrale (213) étant située entre une partie de support avant (214) et le bord arrière dudit élément transversal de renfort avant supérieur (113).

4. Ensemble toit panoramique (111) selon l'une quelconque des revendications précédentes ; dans lequel le bord avant du couvercle de revêtement avant (116) est attaché mécaniquement au moyen d'au moins une connexion soudée au bord avant de l'élément transversal structurel avant (112).

5. Ensemble toit panoramique (111) selon l'une quelconque des revendications précédentes ; dans lequel le bord arrière du couvercle de revêtement avant (116) est attaché mécaniquement au moyen d'au moins une connexion soudée au bord arrière de l'élément transversal de renfort avant supérieur (113) et au bord avant du châssis périphérique (115).

6. Ensemble toit panoramique (111) selon la revendication 3 ; dans lequel la partie de support avant (214) de l'élément transversal de renfort avant supérieur (113) présente une forme de plateau qui est configurée pour servir de support à une section de la surface inférieure du couvercle de revêtement avant (116) et est agencée entre le bord avant de l'élément transversal de renfort avant supérieur (113) et la seconde partie centrale (213) de l'élément transversal de renfort avant supérieur (113).

7. Ensemble toit panoramique (111) selon l'une quelconque des revendications précédentes, dans lequel le bord avant du couvercle de revêtement arrière (117) est attaché mécaniquement au moyen d'au moins une connexion soudée au bord arrière du châssis périphérique (115), dans lequel ledit bord avant du châssis périphérique (115) comprend une forme de plateau qui est configurée pour servir de support à la surface inférieure du bord avant du couvercle de revêtement arrière (117).

8. Procédé de montage d'un ensemble toit panoramique (111) selon l'une quelconque des revendications 1 à 7, dans lequel le procédé comprend les étapes consistant à :
a) attacher mécaniquement l'élément transversal structurel avant inférieur (112) et l'élément transversal de renfort avant supérieur (113), formant un ensemble de renfort avant,
b) positionner l'ensemble de renfort avant et l'élément transversal structurel arrière (114) par rapport aux ensembles latéraux du véhicule, l'ensemble de renfort avant étant entre les montants avant de la carrosserie du véhicule, et l'élément transversal structurel arrière (114) étant positionné entre les montants arrière de la carrosserie du véhicule,
c) attacher mécaniquement chaque extrémité latérale de chaque ensemble de renfort avant à son ensemble latéral respectif et attacher mécaniquement chaque extrémité latérale de chaque élément transversal structurel arrière (114) à son ensemble latéral respectif,
d) attacher mécaniquement le châssis périphérique (115) et le couvercle de revêtement arrière (117),
e) positionner le châssis périphérique (115), conjointement avec le revêtement arrière (117), par rapport à l'élément transversal de renfort avant supérieur (113) et aux ensembles latéraux du véhicule et attacher mécaniquement le châssis périphérique (115) au couvercle de revêtement avant (116), l'élément transversal de renfort avant supérieur (113), l'élément transversal structurel arrière (114) et chacun des bords transversaux générés par les ensembles latéraux du véhicule, et
f) positionner et attacher mécaniquement le couvercle de revêtement avant (116) sur l'ensemble de renfort avant, l'élément transversal de renfort avant supérieur (113) étant agencé, selon l'axe Y vertical du véhicule, entre le couvercle de revêtement avant (116) et l'élément transversal structurel avant inférieur (112).

9. Procédé de montage selon la revendication 8, lorsque celle-ci dépend de la revendication 2, dans lequel l'étape a) consiste à attacher mécaniquement, au moyen d'au moins une connexion soudée, le bord avant de l'élément transversal de renfort avant supérieur (113) à une première partie centrale (212) de l'élément transversal structurel avant inférieur (112), ladite première partie centrale (212) étant située entre le bord avant et arrière dudit élément structurel avant inférieur (112).

10. Procédé de montage selon l'une quelconque des revendications 8 à 9, lorsque celle-ci dépend de la revendication 3, dans lequel l'étape a) consiste à attacher mécaniquement, au moyen d'au moins une connexion soudée, le bord arrière de l'élément transversal structurel avant inférieur (112) à une seconde partie centrale (213) de l'élément transversal de renfort avant supérieur (113), ladite seconde partie centrale (213) étant située entre une partie de support avant (214) et le bord arrière dudit élément transversal de renfort avant supérieur (113).

11. Procédé de montage selon l'une quelconque des revendications 8 à 10, lorsque celle-ci dépend de la revendication 8, dans lequel l'étape c) consiste à attacher mécaniquement, au moyen d'au moins une connexion soudée, le bord avant du couvercle de revêtement arrière (117) au bord arrière du châssis périphérique (115), ledit bord arrière du châssis périphérique (115) comprenant une forme de plateau.

12. Procédé de montage selon l'une quelconque des revendications 8 à 11, lorsque celle-ci dépend de la revendication 4, dans lequel l'étape f) consiste à attacher mécaniquement, au moyen d'au moins une connexion soudée, le bord avant du couvercle de revêtement avant (116) au bord avant de l'élément transversal structurel avant (112).

13. Procédé de montage selon l'une quelconque des revendications 8 à 12, lorsque celle-ci dépend de la revendication 5, dans lequel l'étape f) consiste à attacher mécaniquement, au moyen d'au moins une connexion soudée, le bord arrière du couvercle de revêtement avant (116) au bord arrière de l'élément transversal de renfort avant supérieur (113) et la surface de support avant du châssis périphérique (115).

14. Procédé de montage selon l'une quelconque des revendications précédentes, dans lequel le procédé comprend en outre l'étape consistant à appliquer un cordon d'une substance adhésive (215) sur la seconde partie centrale en forme de plateau de l'élément transversal de renfort avant supérieur (113) et à supporter une section correspondante de la surface inférieure du couvercle de revêtement avant (116) sur le cordon de substance adhésive (215), agissant comme support pour le couvercle de revêtement avant (116).

15. Véhicule comprenant une carrosserie comprenant une paire de montants A avant et une paire de montants C ou D arrière sur lesquels un ensemble toit panoramique (111) est monté selon l'une quelconque des revendications 1 à 8, au moyen du procédé de montage selon l'une quelconque des revendications 8 à 14.
